# EUROPÄISCHE PATENTSCHRIFT

(11) **EP 2 184 220 B1**
(45) Veröffentlichungstag und Bekanntmachung des Hinweises auf die Patenterteilung: **10.04.2013**
(21) Anmeldenummer: 09010895.2
(22) Anmeldetag: 26.08.2009
(51) Int. Cl.: B62D 21/02, B62D 21/12, B62D 21/14

(54) **Fahrgestellrahmen mit variabler Zusammenbau-Schnittstelle**
Chassis frame with variable assembly interface
Cadre de châssis doté d'une interface d'asemblage variable

(30) Priorität: 07.11.2008 DE 102008056406
(43) Veröffentlichungstag der Anmeldung: 12.05.2010
(73) Patentinhaber: MAN Truck & Bus AG, 80995 München (DE)
(72) Erfinder: Acer, Serkan, 87719 Mindelheim (DE); Gernhardt, Alexander, 81929 München (DE); Kreisel, Markus, 86495 Eurasburg (DE); Dänzer, Eckard, 85250 Altomünster (DE); Jablonski, Sascha, 82140 Olching (DE); Lamche, Oliver, 82140 Olching (DE); Eberle, Andreas, 80687 München (DE); Jochum, Bernd Michael, 85748 Garching (DE); Ziehlke, Jürgen, 82152 Planegg (DE)

(56) Entgegenhaltungen:
- EP-A1- 1 634 798
- EP-A2- 0 983 930
- EP-A2- 1 506 914
- EP-A2- 1 826 101
- FR-A5- 2 213 664
- US-A- 4 847 972

## Beschreibung

Die Erfindung bezieht sich auf ein Nutzfahrzeug mit einem modular aufgebauten und mit Längsträgern sowie Querträgern versehenen Fahrgestell nach dem Oberbegriff des Anspruchs 1 der Patentanmeldung.

Ein solches Nutzfahrzeugfahrgestell ist beispielsweise aus der DE 101 40 921 bekannt. Hier ist das Nutzfahrzeugfahrgestell rahmenförmig aus zwei Längsträgern und mehreren, die Längsträger miteinander verbindenden Querträgern zusammengesetzt und weist eine Vorderachsanordnung sowie eine Hinterachsanordnung auf. Die beiden Längsträger sind jeweils in einen innenliegenden vorderen Längsträgerabschnitt sowie in einen von dem vorderen Längsträgerabschnitt getrennten, seitlich weiter außen liegenden hinteren Längsträgerabschnitt unterteilt. Die beiden Längsträgerabschnitte sind durch jeweils einen Kröpfungsteil starr miteinander verbunden, wobei im Bereich der weiter außen liegenden Längsträgerabschnitte eine Hinterachsanordnung positioniert ist, deren Spurbreite größer ist als die Spurbreite der Vorderachsanordnung. Nachteilig ist jedoch, dass im genannten Stand der Technik keine Module miteinander kombinierbar sind, deren Längsträgerabschnitte jeweils eine unterschiedliche Bodenfreiheit aufweisen.

Die EP 1 506 914 zeigt ein derartiges Gestell, bei dem zusätzlich auch ein Höhenversatz ermöglicht wird.

Aufgabe der Erfindung ist es, Nutzfahrzeugfahrgestell der oben beschriebenen Art so weiterzubilden, dass Fahrgestellmodule unterschiedlicher Spurbreite und/oder unterschiedlicher Bodenfreiheit flexibler miteinander kombinierbar sind. Die Spurbreite ist in diesem Zusammenhang der Abstand zwischen rechtem und linkem Rad einer Achse. Demgegenüber bezeichnet die Bodenfreiheit des Fahrzeugs den Abstand zwischen dem tiefsten Punkt der Karosserie des Fahrzeugs und der Fahrbahn.

Die Aufgabe wird erfindungsgemäß durch die im kennzeichnenden Teil des Anspruchs 1 genannten Merkmale gelöst.

Im modernen Nutzfahrzeugbau im Allgemeinen und beim Omnibusbau im Speziellen kommen immer häufiger modulare Fahrgestelle zum Einsatz, die aus mindestens zwei modularen Längsträgerabschnitten bestehen, deren Enden durch einen Verbindungsschuh miteinander verbunden sind. Die einzelnen Module können dabei für den Einsatz in einem Hochbodenchassis und einem Niederflurchassis konstruiert sein. Je nachdem weist das einzelne Modul eine hohe oder eine geringe Bodenfreiheit auf. Denkbar sind Fahrgestelle, in denen ausschließlich Hochbodenmodule Verwendung finden. Darüber hinaus sind Fahrgestelle denkbar, bei denen lediglich Niederflurmodule zum Einsatz kommen. Erfindungsgemäß ist zusätzlich vorgesehen, im Baukastensystem Hochbodenmodule mit Niederflurmodulen zu kombinieren. Für die Konstruktion derartiger Fahrgestelle sieht die Erfindung Verbindungsschuhe unterschiedlicher Bauhöhe vor, die über verschiedene im Winkel zueinander angeordnete Flanschflächen verfügen. Das erfindungsgemäße, aus modularen Längsträgerabschnitten bestehende Fahrgestell kann je nach Anordnung der erfindungsgemäßen Verbindungsschuhe als Hochbodenchassis oder als Niederflurchassis ausgebildet sein. Die erfindungsgemäßen Verbindungsschuhe ermöglichen wahlweise eine maximale oder eine minimale Bodenfreiheit eines modularen Längsträgerabschnittes. Zwischen der maximalen und der minimalen Bodenfreiheit kann das erfindungsgemäße Modul mit jeder beliebigen Bodenfreiheit angeordnet werden. Die Verbindungsschuhe können dabei modulübergreifend ausgebildet sein oder die Längsträgerabschnitte eines Endes eines Moduls miteinander verbinden.

Der erfindungsgemäße Verbindungsschuh kann ein U-Profil aufweisen, wobei zwei Schenkel des U-Profils mit einem Steg verbunden sind. Das U-Profil kann geschlossen sein, indem wenigstens ein Versteifungselement in den U-förmigen Verbindungsschuh eingreift und stirnseitig vom Steg des Verbindungsschuhs und zu beiden Seiten zumindest bereichsweise von den Schenkeln des Verbindungsschuhs eingefasst wird. Der Steg des Verbindungsschuhs verläuft rechtwinklig zu den Schenkeln des Verbindungsschuhs. Denkbar ist auch, dass die Schenkel des Verbindungsschuhs gewinkelt zueinander verlaufen. An den Innen- und Außenseiten der Schenkel sowie der Versteifungselemente und an den Innen- und Außenseiten der Stege sind Flanschflächen angeordnet, die der Anlage und Befestigung von Flanschflächen von Längsträgern und weiteren Verbindungsschuhen dienen. Verbindungsschuhe können an den Außenseiten ihrer Verbindungsstege aneinander anliegen. Die Verbindung zwischen Längsträgerabschnitten und Verbindungsschuhen kann einerseits an den Außen- und Innenseiten der Schenkel des Verbindungsschuhs sowie an den Außen- und Innenseiten der Versteifungselemente erfolgen. Die Stege zweier aneinander anliegender Verbindungsschuhe können unterschiedliche Längen aufweisen, zwei an ihren Verbindungsstegen aneinander angrenzende Verbindungsschuhe können um ihre Längsachsen gegeneinander verdreht werden. Zwei über ihre Stege aneinander anliegende Verbindungsschuhe können zur gegenseitigen Verbindung horizontal oder vertikal gegeneinander verschoben werden. Längsträgerabschnitte sind über Verbindungsschuhe miteinander verbindbar. Die Längsträgeabschnitte können dabei horizontal oder vertikal gewinkelt zueinander verlaufen. Denkbar ist, an den Seitenflächen zweier aneinander angrenzender Verbindungsschuhe je eines Rahmenmoduls ein Versteifungselement vorzusehen, das beide Verbindungsschuhe miteinander verbindet und eine zusätzliche Flanschfläche bereitstellt. In vergleichbarer Art und Weise kann auch eine weitere Flanschfläche an den Schenkeln zweier stirnseitig aneinander angrenzender Verbindungsschuhe angeordnet sein und die Verbindungsschuhe miteinander verbinden. Zur Verlängerung des jeweiligen Rahmenmoduls kann der Längsträgerabschnitt bei der Befestigung an der Flanschfläche des Verbindungsschuhs an den Steg des jeweiligen Verbindungsschuhs anstoßen oder von diesem beabstandet sein. Die Schenkel des Verbindungsschuhs können an den Schenkeln des Längsträgerabschnitts anliegen und den Verbindungsschuh mit dem Längsträgerabschnitt verbinden. Die Schenkel des Verbindungsschuhs verfügen dabei über Reihen von Durchtrittslöchern, die zum Durchtritt von Befestigungsmitteln vorgesehen sind. Je nach dem, welche zum Steg des Verbindungsschuhs parallele Reihe von Durchtrittslöchern für die Anbringung der Befestigungsmittel gewählt wird, kann der Abstand des Längsträgerabschnitts zum Verbindungsschuh variiert werden. Zur Verbindung des Längsträgers mit der Flanschfläche des jeweiligen Versteifungselements oder des Schenkels des Verbindungsschuhs kann der Längsträgerabschnitt an der Flanschfläche zwischen den benachbarten Versteifungselementen oder den benachbarten Schenkeln des jeweiligen Verbindungsschuhs positioniert sein. Darüber hinaus ist es auch denkbar, dass der Längsträgerabschnitt bei der Verbindung mit dem Verbindungsschuh an einem Versteifungselement oder an einem Schenkel des Verbindungsschuhs zur Anlage kommt.

In einer weiteren Ausführungsform der Erfindung weist der Verbindungsschuh wenigstens eine, die Höhendifferenz zwischen den Längsträgerabschnitten überbrückende Flanschfläche auf. Hierdurch können Hochbodenflurmodule und Niederflurmodule eines Fahrgestellrahmens miteinander kombiniert werden.

In einer weiteren Ausführungsform der Erfindung weist der Verbindungsschuh wenigstens eine Flanschfläche auf, die die Höhendifferenz und einen gegebenenfalls vorhandenen horizontalen Abstand der miteinander zu verbindenden Enden der Längsträgerabschnitte überbrückt. Auf diese Weise können Hoch- und Niederflurmodule miteinander kombiniert werden. Gleichzeitig können auch Fahrgestell-Module miteinander kombiniert werden, bei denen die Lichtenweiten der parallel zueinander verlaufenden Längsträgerabschnitte je Modul unterschiedlich groß sind.

In einer weiteren Ausführungsform der Erfindung ist jedes der beiden Enden des Verbindungsschuhs mit dem Ende eines der beiden miteinander zu verbindenden Abschnitte der Längsträger verbunden. Hierdurch kann die Stabilität des Verbindungsschuhs erhöht werden ohne auf zusätzliche Versteifungen zurückgreifen zu müssen. Auf diese Weise können auch die Verbindungsschuhe in modularer Bauweise baukastenförmig eingesetzt werden.

Die Erfindung sieht vor, dass der Verbindungsschuh aus zwei Teilen besteht, von denen je ein Teil an einem Ende der miteinander zu verbindenden Längsträgerabschnitte befestigt ist und die beiden Schuhteile miteinander verbunden sind. Zusätzlich ist vorgesehen, dass die beiden miteinander zu verbindenden Schuhteile je eine vertikale Flanschfläche aufweisen und die beiden einander entsprechenden vertikalen Flanschflächen der Schuhteile miteinander verbindbar sind. Hierdurch wird eine zusätzliche Stabilisierung des Modulendes erreicht und durch eine Verbreiterung der Stirnflächen der aneinander angrenzenden Längsträgerabschnitte die Steifigkeit des Fahrgestells erhöht.

In einer anderen Ausführungsform der Erfindung sind die die beiden Längsträgerabschnitte verbindenden Verbindungsschuhe durch einen Querträger zu einer Einheit verbunden. Darüber hinaus ist vorgesehen, dass die beiden mit den Enden je eines Längsträgerabschnitts verbundenen Schuhteile durch einen Querträger zu einer Einheit miteinander verbunden sind. Außerdem sieht die Erfindung vor, dass die Schuhteile der beiden miteinander zu verbindenden Längsträgerabschnitte je durch einen Querträger miteinander verbunden sind und die beiden Querträger der gegenseitigen Verbindung dienende Flanschflächen aufweisen. Hierdurch wird eine weitere Versteifung und Stabilisierung des Nutzfahrzeugfahrgestells erreicht. Zusätzlich können auf den Querträgern weitere Aggregate wie Luftbalge, Stoßdämpfer oder Seitenwandanbindungen oder Ähnliches vorgesehen sein.

In einer anderen Ausführungsform der Erfindung weisen die zur Verbindung dienenden Flanschflächen ein Lochmuster zur Aufnahme von Befestigungsschrauben, Befestigungsnieten oder dergleichen auf. Die zu verbindenden Flanschflächen können darüber hinaus auch geschweißt oder durch sonstige Verbindungsmittel form-, kraft- oder stoffschlüssig verbunden sein.

Weitere Merkmale, Einzelheiten und Vorteile der Erfindung ergeben sich aus der folgenden Beschreibung einer bevorzugten Ausführungsform der Erfindung sowie anhand der Zeichnung. Hierbei zeigen:
Fig. 1 in Draufsicht zwei aneinander angrenzende Längsträgerabschnitte mit erfindungsgemäßen Verbindungsschuhen,
Fig. 2 An einander angrenzende Längsträgerabschnitte wie in Fig. 1 mit zusätzlichen Versteifungselementen,
Fig. 3 in Seitenansicht zwei aneinander angrenzende Längsträgerabschnitte je eines Moduls mit zugehörigen Verbindungsschuhen,
Fig. 4 die Längsträgerabschnitte entsprechend Fig. 3 mit zusätzlichen Versteifungselementen,
Fig. 5 Längsträgerabschnitte entsprechend Fig.1 mit verlängertem Längsträgerabschnitt und zusätzlichem Aggregateträger,
Fig. 6 eine nicht erfindungsgemäße Verbindung zweier Längsträgerabschnitte in Draufsicht mit nur einem Verbindungsschuh,
Fig. 7 eine Verbindung zweier Längsträgerabschnitte wie nach Fig. 6 mit angeschweißtem Verbindungsschuh,
Fig. 8 eine Verbindung zweier Längsträgerabschnitte mit variablem seitlichen Versatz,
Fig. 9 in Draufsicht eine Verbindung zweier Längsträgerabschnitte mit zusätzlichem Querträger,
Fig. 10 eine Verbindung zweier Längsträgerabschnitte entsprechend Fig. 9 mit variablem seitlichem Versatz,
Fig. 11 in Draufsicht zwei aneinander angrenzende Module mit Verbindungsschuhen in Form von Querträgern,
Fig. 12 eine erfindungsgemäße Verbindung zweier Längsträgerabschnitte gemäß Fig. 11 mit zusätzlichen Verbindungsschuhen,
Fig. 13 in Gesamtansicht einen verbauten Verbindungsschuh,
Fig. 14 in Seitenansicht und als Explosionsdarstellung ein Nutzfahrzeug mit erfindungsgemäßen Rahmenmodulen,
Fig. 15 eine Matrix mit unterschiedlichen Einsatzmöglichkeiten der Verbindungsschuhe in einem Nutzfahrzeug,
Fig. 16 bis 21 in seitlicher Schnittdarstellung die Anordnung zweier Längsträgerabschnitte mit einem Verbindungsschuh und
Fig. 22 den Querschnitt durch einen Verbindungsschuh.

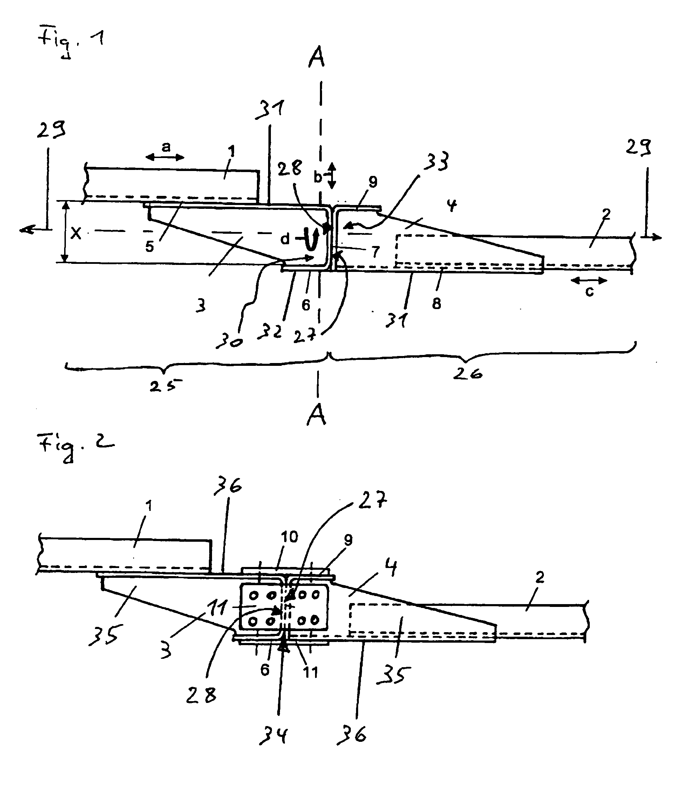

Fig. 1 zeigt in Draufsicht die beiden Längsträgerabschnitte 1 bzw. 2 eines Rahmenmoduls 25 bzw. 26. In der Fig. 1 ist jedem Rahmenmodul 25 bzw. 26 je ein Verbindungsschuh 3 bzw. 4 zugeordnet, wobei die Verbindungsschuhe über Flanschflächen 5 bis 9 verfügen. Die Flanschflächen 5 bis 9 dienen erfindungsgemäß der Verbindung zweier Verbindungsschuhe 3; 4 miteinander oder der Verbindung eines Verbindungsschuhs 3; 4 mit einem Längsträgerabschnitt 1; 2, einem Versteifungselement 10; 11; 13 oder einem Querträger 17; 18 (in Fig. 1 nicht gezeigt). Die vorgenannten Bauelemente können mit dem Verbindungsschuh 3; 4 kraftschlüssig, stoffschlüssig oder formschlüssig verbunden sein. Zur Verbindung der beiden Rahmenmodule 25; 26 stoßen in Fig. 1 die beiden Verbindungsschuhe 3; 4 mit ihren jeweiligen Stirnseiten 27; 28 aneinander. Entsprechend dem Doppelpfeil d kann wenigstens einer der beiden Verbindungsschuhe 3; 4 zur gegenseitigen Verbindung miteinander um die gemeinsame Längsachse 29 der Verbindungsschuhe 3; 4 gedreht werden. In der Fig. 1 liegt der Längsträgerabschnitt 1 des Rahmenmoduls 25 an der Flanschfläche 5 des Verbindungsschuhs 4 an. Der Längsträgerabschnitt 2 des Rahmenmoduls 26 liegt an der Flanschfläche 8 des Verbindungsschuhs 4 an. Die Verbindungsschuhe 3; 4 haben in Draufsicht ein U-Profil 30 mit einem langen Schenkel 31 und einem kurzen Schenkel 32, wobei die beiden Schenkel 31; 32 durch einen Verbindungssteg 33 verbunden sind. Da der Längsträgerabschnitt 1 an der Außenseite des langen Schenkels 31 anliegt und der Längsträgerabschnitt 2 am langen Schenkel 31 des Längsträgerabschnitts 2 anliegt ist in Fig. 1 ein seitlicher Rahmenversatz x des Längsträgerabschnitts 1 gegenüber dem Längsträgerabschnitt 2 möglich. Der Rahmenversatz x kann durch eine gegenseitige Verschiebung der Stirnseiten 27; 28 der Verbindungsschuhe 3; 4 des Rahmenmoduls 25; 26 zusätzlich erhöht werden. Je nach der Tiefe des Eingriffs der Längsträgerabschnitte 1; 2 in die Verbindungsschuhe 3; 4 entlang der Längsrichtung 29 ist eine Verlängerung des Radstands des erfindungsgemäßen Nutzfahrzeugs erzielbar.

Fig. 2 unterscheidet sich von Fig.1 dahingehend, dass die Verbindungsfläche 34 der aneinander anliegenden Stirnseiten 27; 28 der Verbindungsschuhe 3 und 4 auf den jeweiligen Oberseiten 35 der Längsträgerabschnitte 1 und 2 sowie an deren Seitenflächen 36 durch Versteifungselemente 10 und 11 verstärkt wird.

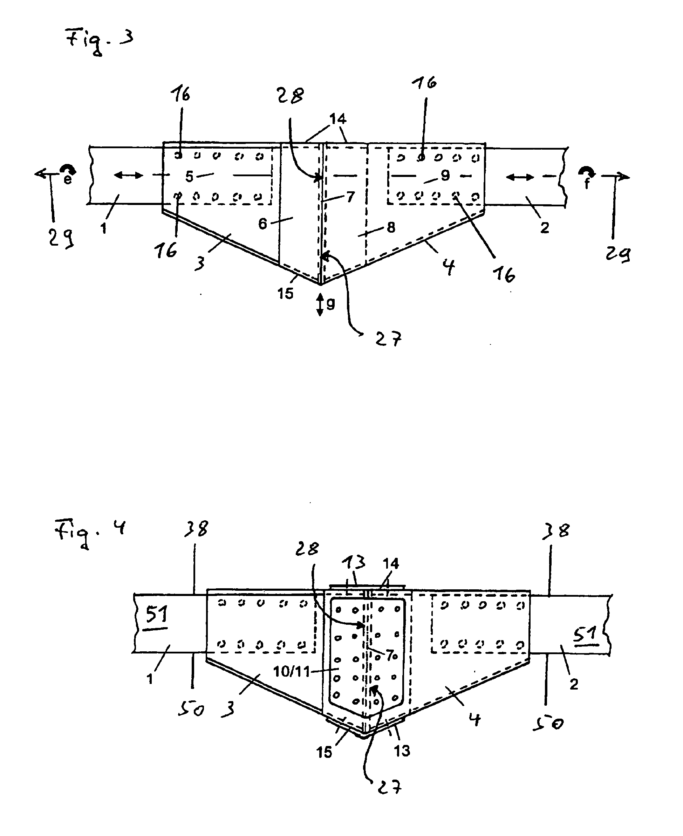

Fig. 3 zeigt zwei Verbindungsschuhe 3 und 4, die jeweils über die Flanschflächen 5; 6; 7; 8; 9 und 14 sowie 15 verfügen. Die beiden Verbindungsschuhe 3 und 4 stoßen über jeweilige Flanschflächen 7 stirnseitig (Ziffern: 27; 28) aneinander an. Der Längsträgerabschnitt 1 liegt an der Flanschfläche 5 des Verbindungsschuhs 3 an, während der Längsträgerabschnitt 2 über die Flanschfläche 9 mit dem Verbindungsschuh 4 in Verbindung steht. Die Flanschflächen 14 und 15 der Verbindungsschuhe 3 und 4 sind gegenüber den Flanschflächen 5 und 9 etwa rechtwinklig angeordnet. Die Flanschflächen 15 der Verbindungsschuhe 3 bzw. 4 sind gegenüber den jeweiligen Flanschflächen 14 der Verbindungsschuhe 3; 4 gewinkelt angeordnet. In Fig. 3 ist weiterhin zu erkennen, dass an den Flanschflächen 5 und 9 Lochbilder 16 vorgesehen sind, die dem Durchtritt von Befestigungsmitteln zur gegenseitigen Verbindung (nicht dargestellt) dienen. Die Längsträgerabschnitte 1 bzw. 2 sind gegenüber den Verbindungsschuhen 3; 4 entlang der Längsachse 29 verschiebbar. An ihren Stirnseiten 27 und 28 sind die Verbindungsschuhe 3 bzw. 4 einzeln oder beide gegeneinander um die jeweilige Längsachse 29 in Pfeilrichtung e bzw. f verdrehbar.

Die Fig. 4 unterscheidet sich dadurch von der Fig. 3, dass zur weiteren Versteifung der Verbindung zwischen den Stirnseiten 27; 28 der Verbindungsschuhe 3; 4 an den Stegen 51 und an den Schenkeln 38; 50 der Längsträgerabschnitte 1 und 2 Versteifungselemente 10 und 11 sowie 13 vorgesehen sind.

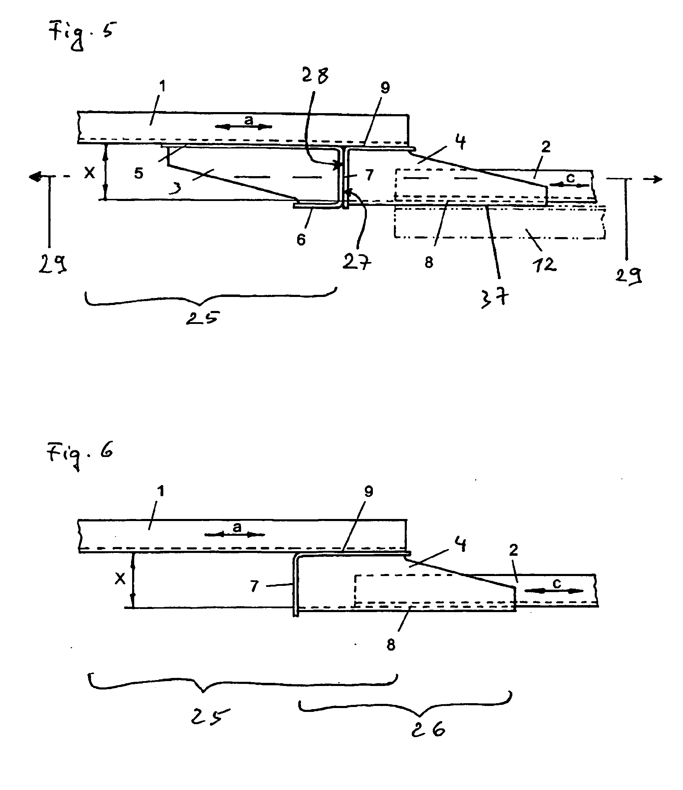

Fig. 5 entspricht in der Darstellung etwa der Fig. 1, mit dem Unterschied, dass der an der Flanschfläche 5 des Verbindungsschuhs 3 anliegende Längsträgerabschnitt 1 des Rahmenmoduls 25 die aneinander anliegenden Stirnseiten 27 bzw. 28 der Verbindungsschuhe 3; 4 übergreift und an der Flanschfläche 9 des Längsträgerabschnitts 2 befestigbar ist. Eine Drehung des Längsträgerabschnitts 2 um die Längsachse 29 gegenüber dem Längsträgerabschnitt 1 ist in Fig. 3 nicht mehr möglich. Wie in der Fig. 5 dargestellt ist, ist der Längsträgerabschnitt 2 an der Flanschfläche 8 des Verbindungsschuhs 4 anbringbar. Ein weiterer Aggregateträger 12 ist an der Flanschfläche 37 des Verbindungsschuhs 4 befestigbar. Zur Befestigung an den Verbindungsschuhen 3 und 4 ist der Längsträger 1 entlang dem Doppelpfeil a axial verschiebbar. In gleicher Weise ist der Längsträgerabschnitt 2 zur Verbindung mit dem Verbindungsschuh 4 entlang dem Doppelpfeil c axial verschiebbar.

In der Fig. 6 ist die Verbindung des Längsträgerabschnitts 1 des Rahmenmoduls 25 mit dem Längsträgerabschnitt 2 des Rahmenmoduls 26 dargestellt, wobei die Verbindung der beiden Längsträgerabschnitte 1; 2 durch den Verbindungsschuh 4 bewerkstelligt wird. Der Längsträgerabschnitt 1 des Rahmenmoduls 25 liegt dabei an der Flanschfläche 9 des Verbindungsschuhs 4 an. Um den Abstand x seitlich versetzt ist der Längsträgerabschnitt 2 des Rahmenmoduls 26 an der Flanschfläche 8 des Verbindungsschuhs 4 befestigt. Wie zuvor in Fig. 1 dargestellt, sind die Längsträgerabschnitte 1 bzw. 2 zur Befestigung am Verbindungsschuh 4 entsprechend der Doppelpfeile a bzw. c axial verschiebbar.

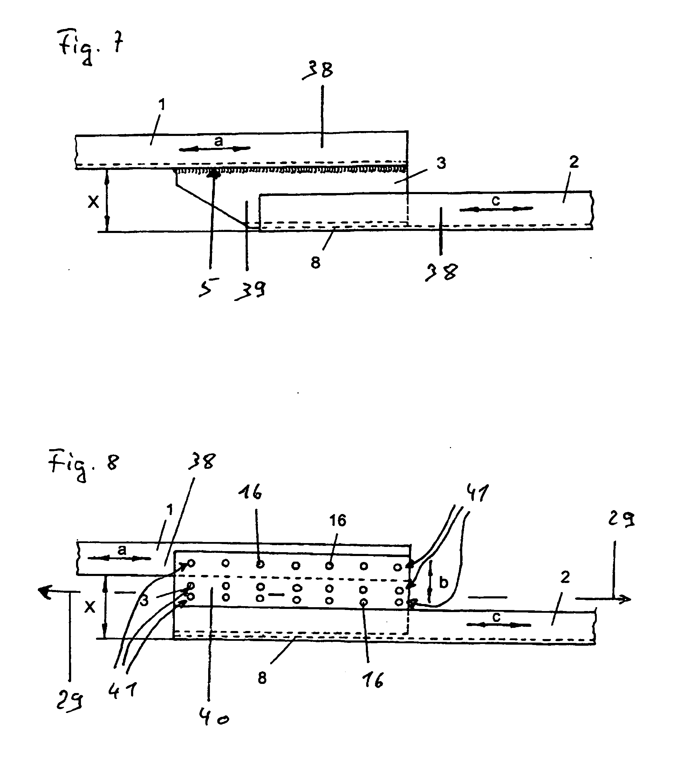

Fig. 7 zeigt in Draufsicht die beiden Längsträgerabschnitte 1 und 2, die über einen Verbindungsschuh 3 miteinander in Verbindung stehen. Der Längsträgerabschnitt 1 ist an der Flanschfläche 5 des Verbindungsschuhs 3 angeschweißt. Der Schenkel 38 des Längsträgerabschnitts 2 übergreift zur flächigen Verbindung mit dem Verbindungsschuh 3, dessen Flanschfläche 39.

In der Fig. 8 ist ein Verbindungsschuh 3 dargestellt, dessen Schenkel 40 ein Lochbild 16 aufweist, das dem Durchtritt von Befestigungsmitteln wie zum Beispiel Befestigungsschrauben, Nieten oder dergleichen dient, mit denen der Schenkel 40 des Verbindungsschuhs 3 mit dem Schenkel 38 des Längsträgerabschnitts 1 kraft- und formschlüssig verbindbar ist. In der Fig. 8 weist das Lochbild 16 des Verbindungsschuhs 3 mehrere Reihen 41 von parallel zueinander verlaufenden Durchtrittslöchern auf, über die der seitliche Rahmenversatz x des Längsträgerabschnitts 1 gegenüber dem Längsträgerabschnitt 2 in Richtung des Doppelpfeils b variiert werden kann. Wie in den vorgenannten Figuren ist auch in Fig. 8 vor der Befestigung mit dem Verbindungsschuh 3 eine Verschiebung der Längsträger 1 bzw. 2 entlang der Längsachse 29 in Richtung der Doppelpfeile a und c möglich.

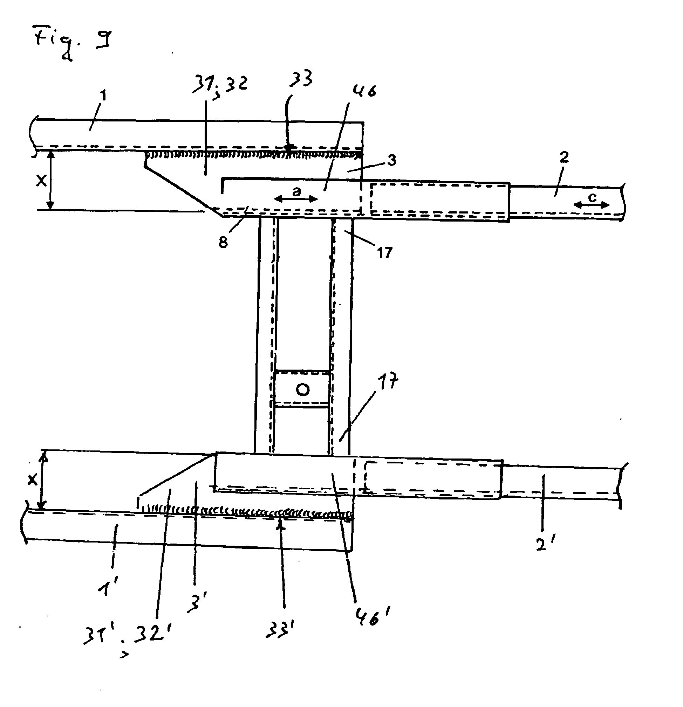

Fig. 9 entspricht im Wesentlichen der Fig. 7, mit dem Unterschied, dass die beiden Längsträgerabschnitte 1; 2 über den Steg 33 und die Schenkel 31; 32 des Verbindungsschuhs 3 verbunden sind. Die Stege 33; 33' der Verbindungsschuhe 3; 3' sind quer zu den Längsträgerabschnitten 1; 2; 1'; 2' durch einen Querträger 17 mit einander verbunden. Am Querträger 17 können weitere Aggregate wie zum Beispiel ein Stoßdämpfer 45 (nicht gezeigt) angeordnet sein. Der Querträger 17 weist in Fig. 9 einen Längsträgerabschnitt 46; 46' auf, in den der Längsträgerabschnitt 2; 2' eingreift.

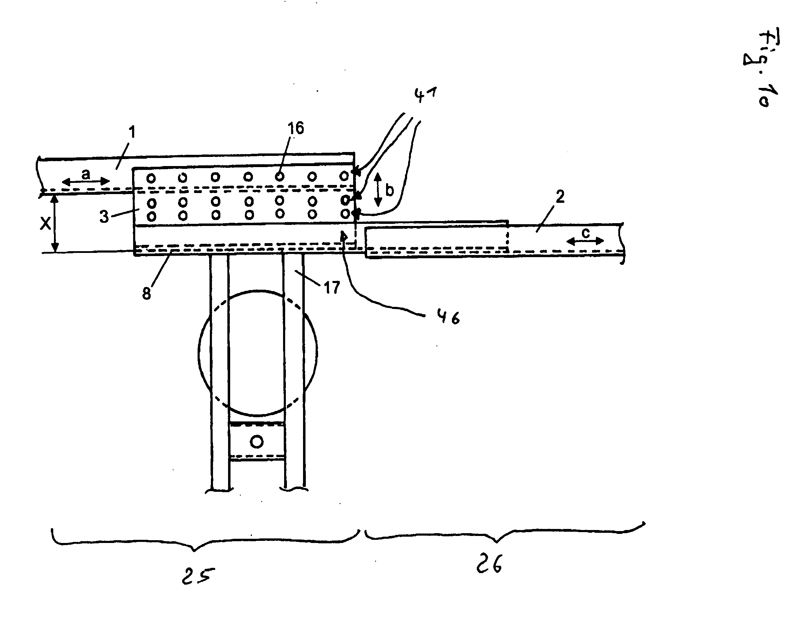

Die nachfolgende Fig. 10 entspricht im Wesentlichen der vorangehenden Fig. 9, mit dem Unterschied, dass der Verbindungsschuh 3 dem in der Fig. 8 dargestellten Verbindungsschuh 3 entspricht, dessen Durchtrittslochreihen 41 eine Variierung des seitlichen Rahmenversatzes x der Längsträgerabschnitte 1 des Rahmenmoduls 25 gegenüber dem Längsträgerabschnitt 2 des Rahmenmoduls 26 ermöglichen. Der Längsträgerabschnitt 2 übergreift in Fig. 10 zur flächigen Verbindung mit diesem den Längsträgerabschnitt 46.

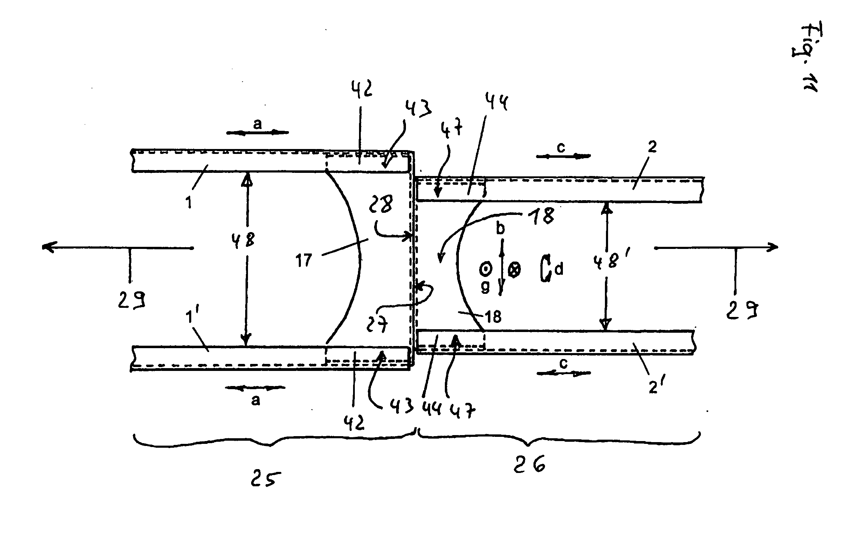

In Fig. 11 werden in Draufsicht Längsträgerabschnitte 1; 1' eines Rahmenmoduls 25 und Längsträgerabschnitte 2; 2' eines Rahmenmoduls 26 gezeigt. Die lichten Weiten 48; 48' der Längsträgerabschnitte 1; 1' und der Längsträgerabschnitte 2; 2' quer zur Fahrtrichtung weichen dabei in den jeweiligen Rahmenmodulen 25 bzw. 26 voneinander ab.

In der Fig. 11 sind die beiden Verbindungsschuhteile 42 der Enden 43 der Längsträgerabschnitte 1; 1' des Rahmenmoduls 25 durch einen Querträger 17 zu einer Einheit miteinander verbunden. Im anschließenden Rahmenmodul 26 sind die beiden Verbindungsschuhteile 44 der Enden 47 der Längsträgerabschnitte 2; 2' durch einen Querträger 18 zu einer Einheit miteinander verbunden. Die Querträger 17 und 18 sind dabei an den ihre Stirnseiten in Richtung der Längsachse 29 form- bzw. kraftschlüssig miteinander verbunden. Zum Eingriff in die Querträger 17 bzw. 18 sind die Längsträgerabschnitte 1; 1' und 2; 2' jeweils in Richtung der Doppelpfeile a bzw. c verschiebbar. In der Fig. 11 ist das Rahmenmodul 26 mit seinem Querträger 18 in Richtung des Doppelpfeils b gegenüber dem Querträger 17 des Rahmenmoduls 25 in Bezug zur Längsachse 29 horizontal verschiebbar. In Bezug zur Längsachse 29 sind die beiden Rahmenmodule 25 und 26 gegeneinander in Richtung des Doppelpfeils g vertikal verschiebbar. Darüber hinaus sind die beiden Rahmenmodule 25 und 26 um die Längsachse 29 in Richtung des Doppelpfeils d drehbar.

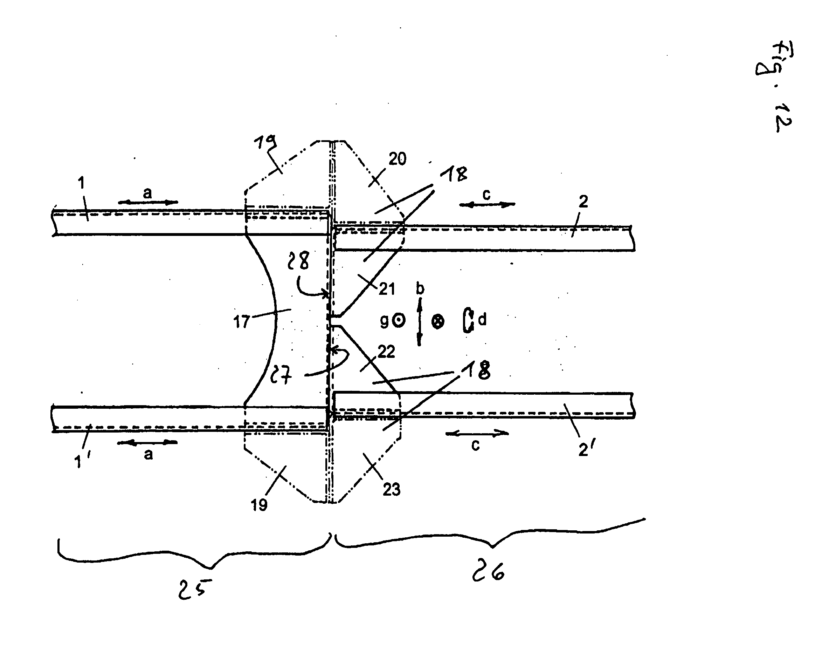

Fig. 12 entspricht grundsätzlich der Darstellung aus Fig. 11 mit dem Unterschied, dass der Querträger 18 durch Schuhteile 21 bzw. 22 ersetzt wird. Je nach Bedarf können weitere Schuhteile 20 bzw. 23 an den Längsträgerabschnitten 2; 2' des Rahmenmoduls 25 sowie Schuhteile 19 an den Längsträgerabschnitten 1; 1' des Rahmenmoduls 25; 26 angebracht sein. Hierdurch kann der Verschiebeweg der Stirnseiten 27 bzw. 28 der Rahmenmodule 25 bzw. 26 gegeneinander vergrößert werden.

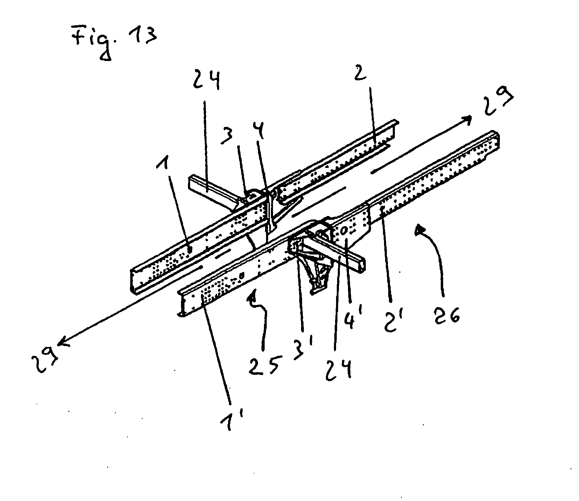

Fig. 13 zeigt in perspektivischer Gesamtansicht je ein Rahmenmodul 25 bzw. 26, deren Längsträgerabschnitte 1; 1' bzw. 2; 2' mittels Verbindungsschuhen 3; 4 bzw. 3'; 4' miteinander verbindbar sind. Quer zur Längsachse 29 sind Querträger 24 vorgesehen.

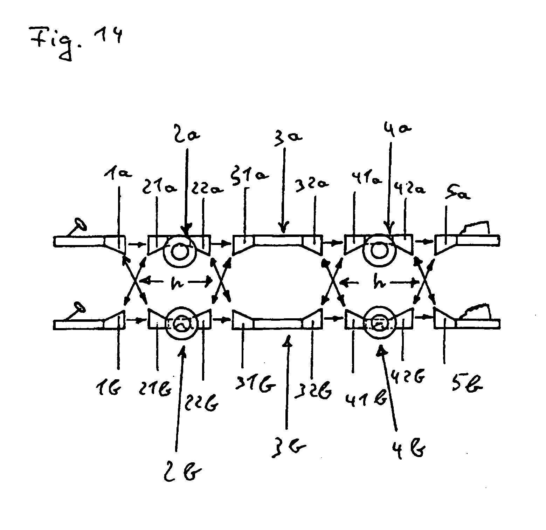

Fig. 14 zeigt in vereinfachter Explosionsdarstellung ein erfindungsgemäßes Nutzfahrzeug mit den Rahmenmodulen 1a, 2a, 3a, 4a und 5a, an denen jeweils die Verbindungsschuhe 1a; 21a; 22a; 31a; 32a; 41a; 42a und 5a vorgesehen sind. In dieser Anordnung sind die Verbindungsschuhe 1 a; 21 a; 22a; 31 a; 32a; 41 a; 42a und 5a so ausgerichtet, dass Rahmenmodule 1a, 2a, 3a, 4a und 5a ein maximales Höhenniveau und somit eine maximal mögliche Bodenfreiheit gewährleisten (im Weiteren Hochbodenmodul genannt).

In der Darstellung des erfindungsgemäßen Nutzfahrzeugs mit den Rahmenmodulen 1b, 2b, 3b, 4b und 5 b sind die Verbindungsschuhe 1b; 21b; 22b; 31b; 32b; 41b; 42b und 5b so ausgerichtet, dass das Höhenniveau des erfindungsgemäßen Nutzfahrzeugs auf ein Minimum reduziert wird (im weiteren Niederflurmodel genannt). Die Doppelpfeile h verdeutlichen die Kombinationsmöglichkeit des dargestellten erfindungsgemäßen Nutzfahrzeugs, indem die Verbindungsschuhe 1a; 21a; 22a; 31a; 32a; 41a; 42a und 5a bzw. 1b; 21b; 22b; 31b; 32b; 41b; 42b und 5b der Rahmenmodule 1a, 2a, 3a, 4a und 5a bzw. 1b, 2b, 3b, 4b und 5 b miteinander kombinierbar sind.

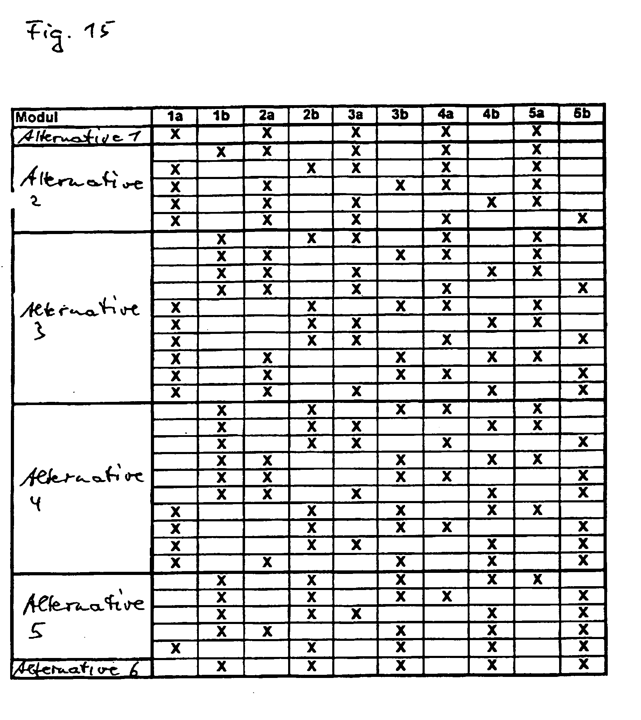

Die Kombinationsvarianten sind in Fig. 15 in einer Variantenmatrix dargestellt. In der ersten Zeile sind dabei die Rahmenmodule 1a, 2a, 3a, 4a, 5a und 1b, 2b, 3b, 4b, 5b abgetragen. In der ersten Spalte sind die Kombinationsalternativen der (a)- Rahmenmodule mit den (b)-Rahmenmodule verzeichnet. Hierbei zeigen
Alternative 1: Ein erfindungsgemäßes Nutzfahrzeug mit den Modulen 1a, 2a, 3a, 4a und 5a,
Alternative 2: Das erfindungsgemäße Nutzfahrzeug mit den Modulen 1a bis 5a, wobei eines der Module aus Alternative 1 durch ein vom Ziffernbetrag gleiches (b)-Modul 1b, 2b, 3b, 4b oder 5b ersetzt ist,
Alternative 3: Ein erfindungsgemäßes Nutzfahrzeug, bei dem je zwei der Module 1a bis 5a aus Alternative 1 jeweils durch zwei vom Ziffernbetrag gleiche (b)-Module 1b bzw. 2b bzw. 3b bzw. 4b oder 5b austauschbar sind,
Alternative 4: Ein erfindungsgemäßes Nutzfahrzeug, bei dem je drei der Module 1a bis 5a durch drei vom Ziffernbetrag gleiche (b)-Module 1 b bzw. 2b bzw. 3b bzw. 4b oder 5b ersetzt sind,
Alternative 5: Ein erfindungsgemäßes Nutzfahrzeug, bei dem je vier der Rahmenmodule 1a bzw. 2a bzw. 3a bzw. 4a oder 5a durch je vier vom Ziffernbetrag gleiche (b)-Module 1 b bzw. 2b bzw. 3b bzw. 4b oder 5b ersetzt sind und
Alternative 6: Ein erfindungsgemäßes Nutzfahrzeug, das insgesamt aus den Modulen 1 b, 2b, 3b, 4b und 5b besteht und über kein (a)-Modul verfügt.

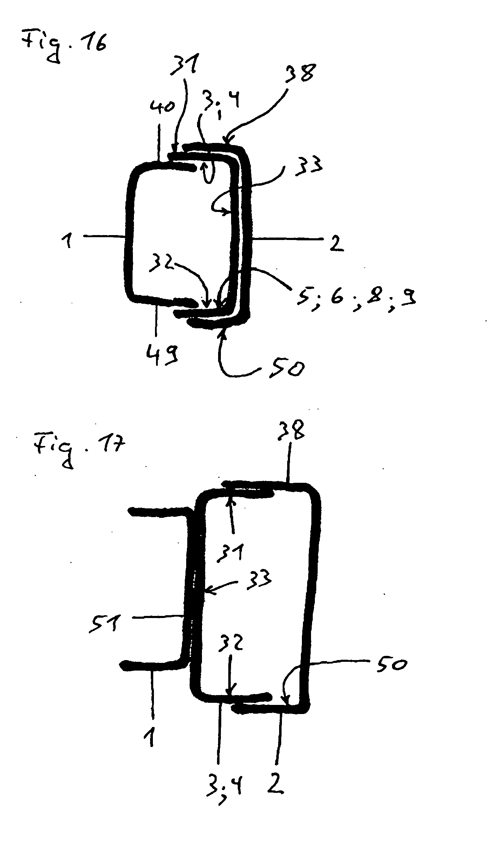

Die Figuren 16 bis 21 stellen jeweils Schnittdarstellungen der erfindungsgemäßen Verbindung zwischen den Längsträgerabschnitten 1 und 2 und dem Verbindungsschuh 3; 4 dar.

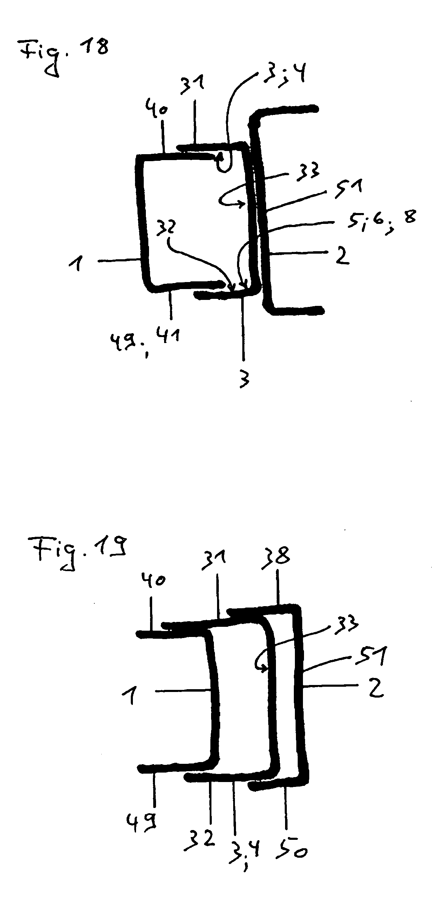

In den Figuren 16 und 18 sind die Schenkel 40; 49 des Längsträgerabschnitts 1 den Schenkeln 31; 32 des Verbindungsschuhs 3, 4 zugewandt. An den Schenkelaußen- beziehungsweise -innenseiten sind Flanschflächen 5, 6, 8, 9 vorgesehen, die Lochbilder 16 (nicht gezeigt) aufweisen, die dem Durchtritt von Verbindungsmitteln dienen.

In der Fig. 17 liegen die Schenkel 31; 32 des Verbindungsschuhs 3, 4 an den Innenseiten der Schenkel 38, 50 des Längsträgers 2 an. Die Verbindung der Schenkel 38, 50 mit den Schenkeln 31; 32 des Verbindungsschuhs 3, 4 erfolgt wie bei der Verbindung zwischen Längsträger 1 und Verbindungsschuh 3, 4 kraft-, form- oder stoffschlüssig.

In Fig. 16 übergreifen die Schenkel 38, 50 des Längsträgers 2 die Schenkel 31; 32 des Verbindungsschuhs 3; 4 und sind wie oben beschrieben miteinander verbindbar. Der Steg 33 des Verbindungsschuhs 3, 4 liegt in den Fig. 17 und 18 Rücken an Rücken an den Stegen 51 des Längsträgerabschnitts 1 bzw. 2 an. Die jeweiligen Stege 33; 51 sind kraft-, stoff- oder formschlüssig miteinander verbunden.

In der Fig. 19 übergreifen die Schenkel 38, 50 des Längsträgerabschnitts 2 die Schenkel 31; 32 des Verbindungsschuhs 3, 4. Die Schenkel 31; 32 des Verbindungsschuhs 3, 4 übergreifen wiederum die Schenkel 40; 49 des Längsträgerabschnitts 1. Die U-Profile der Längsträgerabschnitte 1, 2 und des Verbindungsschuhs 3, 4 sind so ineinander eingeschoben, dass der Steg 33, 51 des jeweils inneren U-Profils zwischen die Schenkel des jeweils übergreifenden U-Profils eingreift. Die Verbindung der jeweils aneinander anliegenden Schenkel sind wie vorstehend beschrieben miteinander verbindbar.

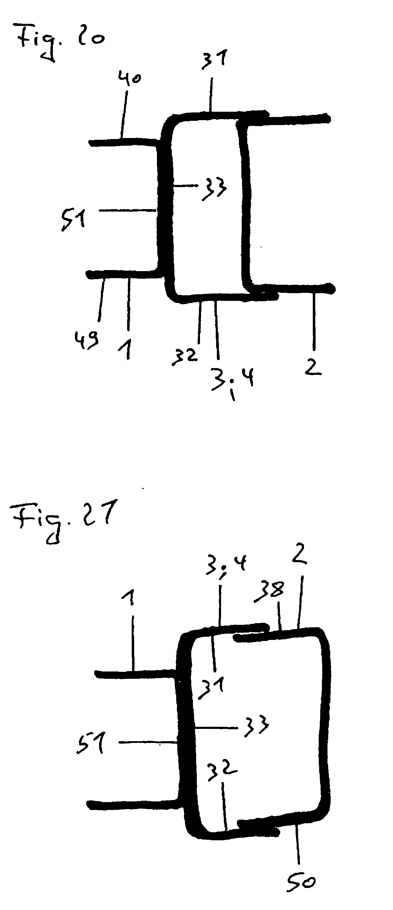

In Fig. 20 sind der Verbindungsschuh 3, 4 und der Längsträgerabschnitt 2 wie in Fig. 19 beschrieben verbunden. Der Längsträgerabschnitt 1 und der Verbindungsschuh 3, 4 sind Rücken an Rücken mit ihren Stegen 51; 33 aneinander befestigt, so dass die Schenkel 40; 49 des Längsträgerabschnitts 1 und die Schenkel 31; 32 des Verbindungsschuhs 3, 4 gegenläufig ausgerichtet sind.

In der Fig. 21 sind der Längsträgerabschnitt 2 und der Verbindungsschuh 3; 4 wie in Fig. 20 beschrieben, miteinander verbunden. Der Längsträgerabschnitt 2 greift so in den Verbindungsschuh 3; 4 ein, dass seine Schenkel 38, 50 an den Innenseiten der Schenkel 31; 32 des Verbindungsschuhs 3, 4 anliegen.

Die Verbindung der Schenkel 31, 32, 38, 50 miteinander erfolgt wie vorstehend beschrieben. Die Verbindung der Stege 51; 33 des Längsträgerabschnitts 1, 2 und des Verbindungsschuhs 3, 4 erfolgt Rücken an Rücken stoff-, kraft- beziehungsweise formschlüssig.

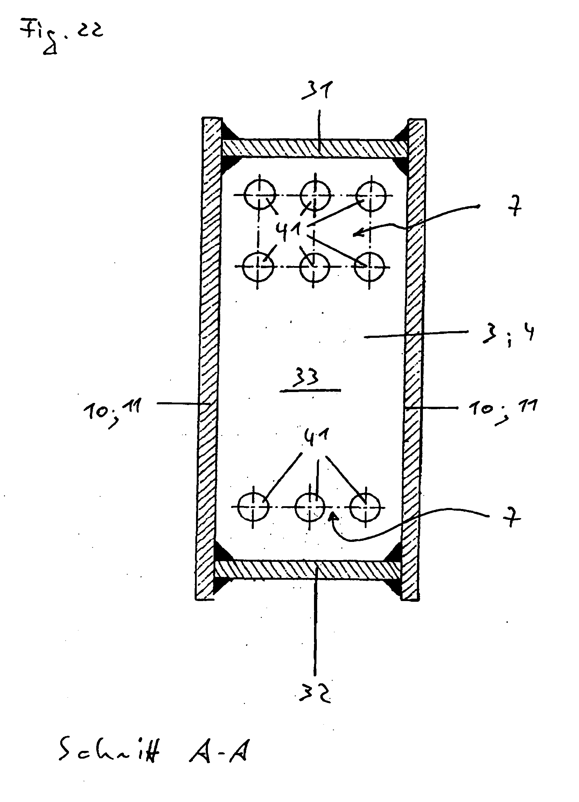

Fig. 22 zeigt den Längsschnitt durch einen Verbindungsschuh 3, 4 entsprechend der Linie A-A in Fig. 1.

Mit den Ziffern 31; 32 sind die Schenkel des Verbindungsschuhs 3, 4 bezeichnet. Seitlich der Schenkel 31; 32 sind Versteifungselemente 10, 11 dargestellt, die zusammen mit den Schenkeln 31; 32 den Steg 33 einfassen. Im Steg 33 sind die Reihen 41 der Durchtrittslöcher zu erkennen an der Flanschfläche 7 vorgesehen.

### Bezugszeichen

- 1: Längsträgerabschnitt
- 1': Längsträgerabschnitt
- 2: Längsträgerabschnitt
- 2': Längsträgerabschnitt
- 3: Verbindungsschuh
- 3': Verbindungsschuh
- 4: Verbindungsschuh
- 5: Flanschfläche
- 6: Flanschfläche
- 7: Flanschfläche
- 8: Flanschfläche
- 9: Flanschfläche
- 10: Versteifungselement
- 11: Versteifungselement
- 12: Aggregateträger
- 13: Versteifungselement
- 14: Flanschfläche
- 15: Flanschfläche
- 16: Lochbild
- 17: Querträger
- 18: Querträger
- 19: Schuhteil
- 20: Schuhteil
- 21: Schuhteil
- 22: Schuhteil
- 23: Schuhteil
- 24: Querträger
- 25: Rahmenmodul
- 26: Rahmenmodul
- 27: Stirnseite des Verbindungsschuhs
- 28: Stirnseite des Verbindungsschuhs
- 29: Längsachse des Verbindungsschuhs
- 30: U-Profil
- 31: langer Schenkel des Verbindungsschuhs
- 32: kurzer Schenkel des Verbindungsschuhs
- 33: Verbindungssteg des Verbindungsschuhs
- 33': Verbindungssteg des Verbindungsschuhs
- 34: Verbindungsfläche
- 35: Oberseite des Längsträgerabschnitts
- 36: Seitenfläche des Längsträgerabschnitts
- 37: Flanschfläche
- 38: Schenkel des Längsträgers

- 39: Flanschfläche
- 40: Schenkel des Verbindungsschuhs
- 41: Reihen von Durchtrittslöchern
- 42: Verbindungsschuhteil
- 43: Ende des Längsträgerabschnitts 1
- 44: Verbindungsschuhteil
- 45: Luftbalg bzw. Stoßdämpfer
- 46: Längsträgerabschnitt
- 46': Längsträgerabschnitt
- 47: Ende des Längsträgerabschnitts 2
- 48: Lichte Weite
- 48': Lichte Weite
- 50: Schenkel des Längsträgers
- 51: Steg des Längsträgers
- 1a; 2a; 3a; 4a; 5a: Rahmenmodul
- 1b; 2b;: 3b; 4b; 5b Rahmenmodul
- 1a; 21a; 22a; 31a; 32a; 41a; 42a;5a: Verbindungsschuh
- 1b; 21b; 22b; 31b; 32b; 41b; 42b; 5b: Verbindungsschuh
- a; b; c; d, e; f; g; h: Doppelpfeil
- x: Rahmenversatz

## Patentansprüche

1. Nutzfahrzeug, dessen durch Querträger (17) mit einander verbundene Längsträger des Fahrgestells aus mindestens zwei modularen Längsträgerabschnitten (1; 1'; 2; 2') eines Rahmenmoduls (25, 26) bestehen, deren Enden (43; 47) durch einen Verbindungsschuh (3; 3'; 4, 4') miteinander verbunden sind, wobei die Längsträgerabschnitte (1; 1'; 2; 2') in einem unterschiedlichen Höhenniveau angeordnet sind und der Verbindungsschuh (3; 3'; 4, 4') die Höhendifferenz zwischen den miteinander zu verbindenden Enden (43; 47) der Abschnitte (1; 1'; 2; 2') überbrückt, **dadurch gekennzeichnet, dass** jedem der Längsträgerabschnitte (1; 1'; 2; 2') der Rahmenmodule (25; 26) je ein Verbindungsschuh (3; 3'; 4; 4') zugeordnet ist, wobei die Verbindungsschuhe (3; 3'; 4; 4') jeweils über mehrere Flanschflächen (5 bis 9) verfügen, über welche Flanschflächen (5 bis 9) die Verbindungsschuhe (3; 3'; 4; 4') miteinander verbunden sind und an welchen Flanschflächen (5 bis 9) weiter die Längsträgerabschnitte (1; 1'; 2; 2') entsprechend eines vorgegebenen seitlichen Rahmenversatzes (x) der beiden Längsträgerabschnitte angebunden sind.

2. Nutzfahrzeug nach Anspruch 1, **dadurch gekennzeichnet, dass** jedes der beiden Enden des Verbindungsschuhs (3; 3'; 4, 4') mit dem Ende (43; 47) eines der beiden miteinander zu verbindenden Abschnitte (1; 1'; 2; 2') der Längsträger verbunden ist.

3. Nutzfahrzeug nach Anspruch 1 oder 2, **dadurch gekennzeichnet, dass** der Verbindungsschuh (3; 3'; 4, 4') aus zwei Teilen (19; 20; 21; 22; 23) besteht, von denen je ein Teil an einem Ende (43; 47) der miteinander zu verbindenden Längsträgerabschnitte (1; 1'; 2; 2') befestigt ist und die beiden Schuhteile (19; 20; 21; 22; 23) miteinander verbunden sind.

4. Nutzfahrzeug nach Anspruch 3, **dadurch gekennzeichnet, dass** die beiden miteinander zu verbindenden Schuhteile (19; 20; 21; 22; 23) je eine vertikale Flanschfläche (5; 6; 7; 8; 9) aufweisen und die beiden einander entsprechenden vertikalen Flanschflächen (5; 6; 7; 8; 9) der Schuhteile (19; 20; 21; 22; 23) miteinander verbunden sind.

5. Nutzfahrzeug nach einem der vorhergehenden Ansprüche, **dadurch gekennzeichnet, dass** die beiden die Längsträgerabschnitte (1; 1'; 2; 2') verbindenden Verbindungsschuhe (3; 3'; 4, 4') durch einen Querträger (17) zu einer Einheit verbunden sind.

6. Nutzfahrzeug nach einem der Ansprüche 3 bis 5, **dadurch gekennzeichnet, dass** die beiden mit den Enden (43; 47) eines Längsträgerabschnitts (1; 1'; 2; 2') verbundenen Schuhteile (19; 20; 21; 22; 23) durch einen Querträger (17) zu einer Einheit miteinander verbunden sind.

7. Nutzfahrzeug nach einem der Ansprüche 3 bis 5, **dadurch gekennzeichnet, dass** die Schuhteile (19; 20; 21; 22; 23) der beiden miteinander zu verbindenden Längsträgerabschnitte (1; 1'; 2; 2') je durch einen Querträger (17; 18) miteinander verbunden sind und die beiden Querträger (17; 18) zu ihrer Verbindung miteinander dienende Flanschflächen (5; 6; 7; 8; 9) aufweisen.

8. Nutzfahrzeug nach einem der vorhergehenden Ansprüche, **dadurch gekennzeichnet, dass** die zur Verbindung dienenden Flanschflächen (5; 6; 7; 8; 9) ein Lochbild (16) zur Aufnahme von Befestigungsschraube, Befestigungsnieten oder dergleichen aufweist.

## Claims

1. Commercial vehicle, the longitudinal carriers of the chassis of which, which are connected to one another by crossmembers (17), consist of at least two modular longitudinal-carrier sections (1; 1'; 2; 2') of a frame module (25, 26), the ends (43; 47) of which longitudinal-carrier sections (1; 1'; 2; 2') are connected to one another by a connecting shoe (3; 3'; 4; 4'), the longitudinal-carrier sections (1; 1'; 2; 2') being arranged at a different level and the connecting shoe (3; 3'; 4; 4') bridging the height difference between those ends (43; 47) of the sections (1; 1'; 2; 2') which are to be connected to one another, **characterized in that** each of the longitudinal-carrier sections (1; 1'; 2; 2') of the frame modules (25; 26) is assigned in each case one connecting shoe (3; 3'; 4; 4'), the connecting shoes (3; 3'; 4; 4') in each case having a plurality of flange faces (5 to 9), via which flange faces (5 to 9) the connecting shoes (3; 3'; 4; 4') are connected to one another, and to which flange faces (5 to 9), furthermore, the longitudinal-carrier sections (1; 1'; 2; 2') are attached in accordance with a predefined lateral frame offset (x) of the two longitudinal-carrier sections.

2. Commercial vehicle according to Claim 1, **characterized in that** each of the two ends of the connecting shoe (3; 3'; 4; 4') is connected to the end (43; 47) of one of those two sections (1; 1'; 2; 2') of the longitudinal carriers which are to be connected to one another.

3. Commercial vehicle according to Claim 1 or 2, **characterized in that** the connecting shoe (3; 3'; 4; 4') consists of two parts (19; 20; 21; 22; 23), of which in each case one part is fastened to an end (43; 47) of the longitudinal-carrier sections (1; 1'; 2; 2') which are to be connected to one another, and the two shoe parts (19; 20; 21; 22; 23) are connected to one another.

4. Commercial vehicle according to Claim 3, **characterized in that** the two shoe parts (19; 20; 21; 22; 23) which are to be connected to one another have in each case one vertical flange face (5; 6; 7; 8; 9), and those two vertical flange faces (5; 6; 7; 8; 9) of the shoe parts (19; 20; 21; 22; 23) which correspond to one another are connected to one another.

5. Commercial vehicle according to one of the preceding claims, **characterized in that** the two connecting shoes (3; 3'; 4; 4') which connect the longitudinal-carrier sections (1; 1'; 2; 2') are connected by a crossmember (17) to form one unit.

6. Commercial vehicle according to one of Claims 3 to 5, **characterized in that** the two shoe parts (19; 20; 21; 22; 23) which are connected to the ends (43; 47) of a longitudinal-carrier section (1; 1'; 2; 2') are connected to one another by a crossmember (17) to form one unit.

7. Commercial vehicle according to one of Claims 3 to 5, **characterized in that** the shoe parts (19; 20; 21; 22; 23) of the two longitudinal-carrier sections (1; 1'; 2; 2') which are to be connected to one another are connected to one another in each case by a crossmember (17; 18), and the two crossmembers (17; 18) have flange faces (5; 6; 7; 8; 9) which serve to connect them to one another.

8. Commercial vehicle according to one of the preceding claims, **characterized in that** the flange faces (5; 6; 7; 8; 9) which serve for connection purposes have a hole pattern (16) for receiving fastening screws, fastening rivets or the like.

## Revendications

1. Véhicule utilitaire, dont les longerons du châssis connectés les uns aux autres par des traverses (17) se composent d'au moins deux portions de longeron modulaires (1 ; 1' ; 2 ; 2') d'un module de cadre (25, 26), dont les extrémités (43 ; 47) sont raccordées l'une à l'autre par un sabot de liaison (3 ; 3' ; 4, 4'), les portions de longeron modulaires (1 ; 1' ; 2 ; 2') étant disposées à un niveau en hauteur différent et le sabot de liaison (3 ; 3' ; 4, 4') surmontant la différence de hauteur entre les extrémités (43 ; 47) à raccorder des portions (1 ; 1' ; 2 ; 2'), **caractérisé en ce qu'**un sabot de liaison (3 ; 3' ; 4, 4') est associé à chaque fois à chacune des portions de longeron modulaires (1 ; 1' ; 2 ; 2') des modules de cadre (25 ; 26), les sabots de liaison (3 ; 3' ; 4, 4') disposant à chaque fois de plusieurs surfaces de bride (5 à 9) par le biais desquelles surfaces de bride (5 à 9) les sabots de liaison (3 ; 3' ; 4, 4') sont raccordés les uns aux autres et auxquelles surfaces de bride (5 à 9) les portions de longeron modulaires (1 ; 1' ; 2 ; 2') sont en outre raccordées en fonction d'un décalage latéral du cadre prédéfini (x) des deux portions de longeron modulaires.

2. Véhicule utilitaire selon la revendication 1, **caractérisé en ce que** chacune des deux extrémités du sabot de liaison (3 ; 3' ; 4, 4') est raccordée à l'extrémité (43 ; 47) de l'une des deux portions des longerons (1 ; 1' ; 2 ; 2') à raccorder l'une à l'autre.

3. Véhicule utilitaire selon la revendication 1 ou 2, **caractérisé en ce que** le sabot de liaison (3 ; 3' ; 4, 4') se compose de deux parties (19 ; 20 ; 21 ; 22 ; 23) dont à chaque fois une partie est fixée à une extrémité (43 ; 47) des portions des longerons (1 ; 1' ; 2 ; 2') à raccorder l'une à l'autre et les deux parties de sabot (19 ; 20 ; 21 ; 22 ; 23) sont raccordées l'une à l'autre.

4. Véhicule utilitaire selon la revendication 3, **caractérisé en ce que** les deux parties de sabot (19 ; 20 ; 21 ; 22 ; 23) à raccorder l'une à l'autre présentent à chaque fois une surface de bride verticale (5 ; 6 ; 7 ; 8 ; 9) et les deux surfaces de bride verticales mutuellement correspondantes (5 ; 6 ; 7 ; 8 ; 9) des parties de sabot (19 ; 20 ; 21 ; 22 ; 23) sont raccordées l'une à l'autre.

5. Véhicule utilitaire selon l'une quelconque des revendications précédentes, **caractérisé en ce que** les deux sabots de liaison (3 ; 3' ; 4, 4') raccordant les deux portions de longeron (1 ; 1' ; 2 ; 2') sont raccordés par une traverse (17) pour former une unité.

6. Véhicule utilitaire selon l'une quelconque des revendications 3 à 5, **caractérisé en ce que** les deux parties de sabot (19 ; 20 ; 21 ; 22 ; 23) raccordées aux extrémités (43 ; 47) d'une portion de longeron (1 ; 1' ; 2 ; 2') sont raccordées l'une à l'autre par une traverse (17) pour former une unité.

7. Véhicule utilitaire selon l'une quelconque des revendications 3 à 5, **caractérisé en ce que** les parties de sabot (19 ; 20 ; 21 ; 22 ; 23) des deux portions de longeron (1 ; 1' ; 2 ; 2') à raccorder l'une à l'autre sont raccordées l'une à l'autre par une traverse respective (17 ; 18), et les deux traverses (17 ; 18) présentent des surfaces de bride (5 ; 6 ; 7 ; 8 ; 9) servant à leur raccordement l'une à l'autre.

8. Véhicule utilitaire selon l'une quelconque des revendications précédentes, **caractérisé en ce que** les surfaces de bride (5 ; 6 ; 7 ; 8 ; 9) servant au raccordement présentent un système de trous (16) pour recevoir des vis de fixation, des rivets de fixation ou similaires.
